# EUROPEAN PATENT APPLICATION

(11) **EP 1 083 156 A1**
(43) Date of publication of application: **14.03.2001**
(21) Application number: 00302181.3
(22) Date of filing: 17.03.2000
(51) Int. Cl.: C03C 27/06, B25B 11/00

(54) **Alignment apparatus**

(30) Priority: 11.09.1999 GB 9921384
(71) Applicant: Wallis, Alan, Sheffield, South Yorkshire S9 2SP (GB)
(72) Inventor: Wallis, Alan, Sheffield, South Yorkshire S9 2SP (GB)
(74) Representative: Perry, Julie Elizabeth

(57) **Abstract**

An alignment tool (10) for use in the correct alignment of two planar members such as glass sheets, comprises suction means (12) for securing to a first sheet, roller means (16) for bearing against and positioning a further sheet, and adjustment means (19, 20, 22) for adjusting the relative positions of the two sheets.

## Description

The present invention relates to a device for correctly aligning two or more substantially planar members during joining thereof. In particular the invention is concerned with the joining of two sheets of glass, but is not limited to this particular use.

When joining two substantially planar members, such as two sheets of glass together, it is essential that the two members to be joined are kept in co-planar alignment, that is to say the two edges to be joined must be level (aligned in the vertical direction) in order to effect a satisfactory joint.

According to a first aspect of the present invention there is provided apparatus for correctly aligning two or more substantially planar members to be joined together, the apparatus comprising first means for securing the apparatus in releasable manner to a first member to be joined, and second means for positioning a further member to be joined to said first member, and adjustment means whereby the position of the second means relative to said first means may be adjusted to correctly align the members to be joined.

Conveniently, the first means comprises a conventional rubber suction device, which is placed over the member and suction applied by means of a lever.

Preferably, the second means is a nylon or rubber coated roller mounted on the apparatus for rotation about an axle which runs substantially parallel to but spaced vertically apart from the plane of the planar member.

Conveniently, the first and second means are connected via a rigid arm which forms a "bridge" between the two. In the preferred embodiment this connecting arm is a double arm with symmetrical left and right sides, which may be separately formed or, as is preferred, bent from a single sheet of material.

The ends of the roller axle are preferably engaged with and freely rotate within matching slots provided on the left and right sides of the connecting arm.

The adjustment means preferably comprises an adjustment bracket mounted on the axle within the connecting arm left and right sides, which may be caused to bear down on the roller axle by rotation of a threaded shaft which extends vertically from the adjustment bracket and through an internally threaded hole in an upper region of the connecting arm, thus adjusting the level of the roller axle (and hence the surface of the roller ) relative to the first (releasable securing) means. The shaft conveniently terminates in a handle which is rotated by the user during alignment of the planar members to be joined.

In use the first means (e.g. the suction device) is releaseably secured to a first planar member which would usually be disposed horizontally, and a second planar member to be joined to the first member is placed under the roller and pushed horizontally into position with its edge adjacent the edge of the first planar member. Then, the vertical position of the adjustment bracket (and hence that of the roller and the second planar member under the roller) is altered by rotating the handle and the threaded shaft attached thereto, until the two edges of the members to be joined come into the desired correct alignment. Once aligned, the apparatus holds the members in that position whilst joining of the two members, for example by means of silicone jointing compound in the case of glass, is carried out.

According to a second aspect of the present invention there is provided a method of holding and correctly aligning two or more substantially planar members to be joined together, the method comprising releaseably securing to the first member to be joined an apparatus comprising first releasable securing means, second positioning means and an adjustment means for adjusting the level of the positioning means relative to the securing means, positioning a further member to be joined to said first member in operative engagement with said positioning means, and operating the adjustment means to correctly align the members to be joined.

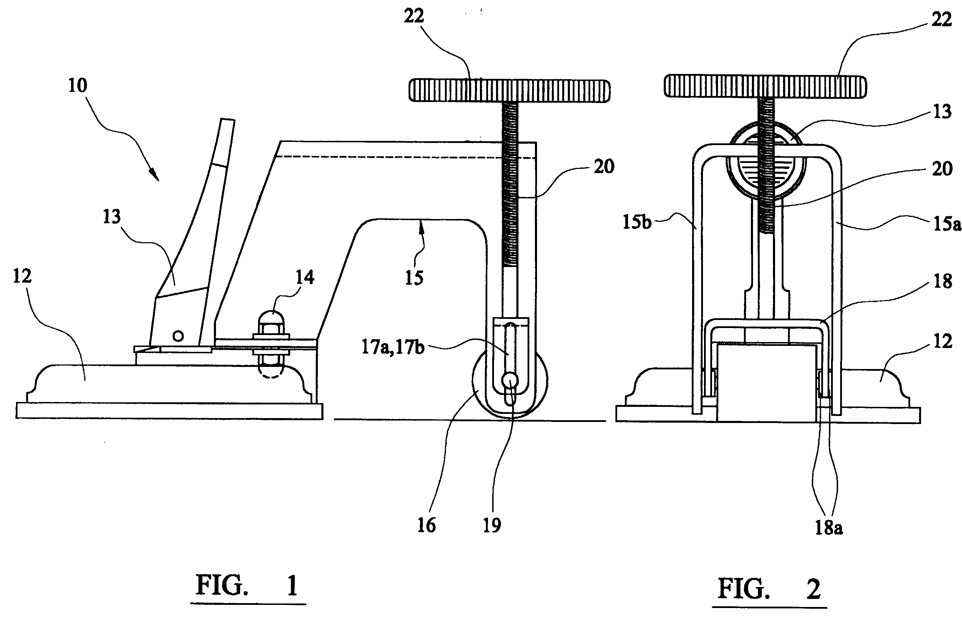

An embodiment of the present invention will now be described, by way of example only, with reference to the accompanying drawings:-
Figure 1 is a side view of the apparatus according to the present invention, and
Figure 2 is an end view of the apparatus shown in Figure 1.

Referring to the drawings, an alignment apparatus 10 according to the present invention comprises a conventional suction device 12 as is commonly used for handling sheet glass, with a suction applying/releasing lever 13 mounted thereon. Also mounted by means of bolt 14 on the suction device 12 is a rigid connecting arm 15 of metal or other strong, rigid material. The connecting arm 15, which is generally "bridge" shaped when viewed from the side, has left and right sides 15a, 15b respectively. At the end of the apparatus furthest away from the suction device 12 there is a roller 16 mounted for rotation about an axle 19.

The ends of the axle 19 protrude through and rotate within vertically disposed slots 17a, 17b provided in sides 15a, 15b respectively. The vertical position of the roller axle 19 within the arm 15 is determined by the position of the axle within the slots, and this is adjusted by means of an adjustment mechanism. The adjustment mechanism comprises a vertically disposed threaded shaft 20 which has a handle 22 at one end thereof and is secured at the other end thereof to a bracket 18 mounted adjacent said slots, within sides 15a & 15b of the arm 15. The bracket 18 is in turn mounted on the roller axle, with each end of the bracket 18 being disposed between an edge of the roller and the side 15a or 15b of arm 15 and spaced therefrom by spacer washers 18a.

Thus, when the suction device of the present apparatus has been applied to a sheet of glass or the like, a second sheet is passed underneath the roller 16 into a position with its edge adjacent the first sheet, and the handle 22 is then rotated, adjusting the vertical position of the bracket and hence that of the roller axle 19 and therefore also of the second sheet of glass, thereby permitting accurate adjustment of the respective levels of the two sheets of glass prior to and/or during joining thereof.

Whilst the apparatus has been described in relation to the joining of two sheets of glass, it is to be understood that there are other applications (eg the joining of wood or other materials in planar form).

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. Apparatus for correctly aligning two or more substantially planar members to be joined together, the apparatus comprising first means for securing the apparatus in releasable manner to a first member to be joined, and second means for positioning a further member to be joined to said first member, and adjustment means whereby the position of the second means relative to said first means may be adjusted to correctly align the members to be joined.

2. Apparatus according to claim 1, wherein the first means comprises a conventional rubber suction device, which is placed over the member and suction applied by means of a lever.

3. Apparatus according to claim 1 or claim 2 wherein second means is a nylon or rubber coated roller mounted on the apparatus for rotation about an axle which runs substantially parallel to but spaced vertically apart from the plane of the planar member.

4. Apparatus according to any of the preceding claims, wherein the first and second means are connected via a rigid arm which forms a "bridge" between the two.

5. Apparatus according to claim 4 wherein the arm is a double arm with symmetrical left and right sides.

6. Apparatus according to claim 5 wherein the ends of the roller axle are preferably engaged with and freely rotate within matching slots provided on the left and right sides of the connecting arm.

7. Apparatus according to claim 5 or claim 6, wherein the adjustment means preferably comprises an adjustment bracket mounted on the axle within the connecting arm left and right sides, which may be caused to bear down on the roller axle by rotation of a threaded shaft which extends vertically from the adjustment bracket and through an internally threaded hole in an upper region of the connecting arm.

8. Apparatus according to claim 7, wherein the shaft conveniently terminates in a handle which is rotated by the user during alignment of the planar members to be joined.

9. A method of holding and correctly aligning two or more substantially planar members to be joined together, the method comprising releaseably securing to the first member to be joined an apparatus comprising first releasable securing means, second positioning means and an adjustment means for adjusting the level of the positioning means relative to the securing means, positioning a further member to be joined to said first member in operative engagement with said positioning means, and operating the adjustment means to correctly align the members to be joined.
